# EUROPÄISCHE PATENTSCHRIFT

(11) **EP 1 121 543 B1**
(45) Veröffentlichungstag und Bekanntmachung des Hinweises auf die Patenterteilung: **05.02.2003**
(21) Anmeldenummer: 99952552.0
(22) Anmeldetag: 12.10.1999
(51) Int. Cl.: F16F 9/36

(54) **KOLBEN MIT DRUCKABHÄNGIGER DICHTWIRKUNG FÜR EINE KOLBEN-ZYLINDER-ANORDNUNG, INSBESONDERE STOSSDÄMPFERKOLBEN**
PISTON WITH PRESSURE-DEPENDENT SEALING EFFECT FOR A PISTON-CYLINDER ARRANGEMENT, ESPECIALLY A SHOCK ABSORBER PISTON
PISTON A EFFET D'ETANCHEITE DEPENDANT DE LA PRESSION POUR ENSEMBLE PISTON-CYLINDRE, EN PARTICULIER PISTON AMORTISSEUR

(30) Priorität: 14.10.1998 DE 19847343
(43) Veröffentlichungstag der Anmeldung: 08.08.2001
(73) Patentinhaber: GKN Sinter Metals GmbH, 42477 Radevormwald (DE)
(72) Erfinder: MAY, Ewald, D-53175 Bonn (DE)
(74) Vertreter: Patentanwälte Maxton & Langmaack
(86) Internationale Anmeldenummer: EP9907640
(87) Internationale Veröffentlichungsnummer: WO00022318

(56) Entgegenhaltungen:
- EP-A- 0 345 561
- EP-A- 0 407 865
- EP-A- 0 557 548
- EP-A- 0 658 611
- DE-A- 4 421 968
- FR-A- 757 515
- US-A- 4 821 850

## Beschreibung

Aus EP-A-0 658 611 ist ein Stoßdämpferkolben bekannt, der einen Kolbenkörper aufweist, der auf seiner Umfangsfläche mit einem umlaufenden Steg versehen ist, an den sich eine Vielzahl von in Achsrichtung verlaufenden Stegen auf einer Seite des umlaufenden Stegs anschließt. Auf diesen Kolbenkörper ist im Spritzgießverfahren eine Dichtung aus thermoplastischem Kunststoff aufgespritzt, wobei insbesondere die sich in axialer Richtung erstreckenden Stege mit ihren dazwischen liegenden voll mit Dichtungswerkstoff ausgefüllten Nuten der zuverlässigen Verankerung des Dichtungswerkstoffs dienen. Die im Spritzguß aufgebrachte Dichtung ermöglicht eine enge Tolerierung, um das sogenannte "blow-by" zu vermeiden und so eine zuverlässige Abdichtung der einander zugeordneten Zylinderräume zu bewirken. Das Verfahren zur Herstellung derartiger spritzgegossener Dichtungen ist verhältnismäßig aufwendig.

Aus US-A-3 212 411 ist eine Kolben-Zylinder-Anordnung bekannt, deren Kolbenkörper auf seiner Umfangsfläche eine Vielzahl von umlaufenden Rillen aufweist. Zum Aufbringen der Dichtung ist ein napfförmiger Vorformling aus PTFE (Polytetrafluorethylen) vorgesehen, der zunächst auf den Kolbenkörper lose aufgesetzt wird. Der so vorbereitete Kolbenkörper wird anschließend zunächst in einen hoch aufgeheizten Form- und Kalibrierzylinder eingedrückt, wobei unter Wärmeeinfluß das PTFE-Material in die Rillen auf der Umfangsfläche des Kolbenkörpers eingepreßt wird. Anschließend wird der Kolbenkörper mit der aufgepreßten Dichtung in einem entsprechend ausgebildeten Kühlzylinder abgekühlt. Die Rillen sind vollständig mit dem Dichtungswerkstoff ausgefüllt, um so eine formschlüssig-feste Verbindung der Dichtung mit der Umfangsfläche des Kolbenkörpers zu bewirken. Für den Einsatz als Stoßdämpferkolben muß anschließend noch die die Stirnfläche des Kolbenkörpers auf einer Seite überdeckende Bodenfläche des Vorformling entfernt werden.

Aus EP-A-682 190 ist ein Stoßdämpferkolben bekannt, der sich in seiner Herstellung von dem vorstehend beschriebenen Verfahren im wesentlichen nur dadurch unterscheidet, daß zum Aufbringen der Dichtung statt eines napfförmigen Vorformlings eine gestanzte Kreisringscheibe eingesetzt wird. Diese Kreisringscheibe wird auf ein Ende des Kolbenkörpers aufgesetzt. Der so vorbereitete Kolbenkörper wird wiederum in einen aufgeheizten Form- und Kalibrierzylinder eingepreßt, wobei die Kreisringscheibe als Band auf die Umfangsfläche des Kolbenkörpers umgelegt und anschließend in die in Umfangsrichtung des Kolbenkörpers verlaufenden Rillen unter Wärmeeinfluß eingepreßt wird. Anschließend wird der mit seiner aufgepreßten Dichtung versehene Kolben durch ein Kühlrohr geführt. Der Dichtungswerkstoff füllt auch hierbei die Rillen praktisch vollständig aus, so daß die Dichtung formschlüssig-fest mit der Umfangsfläche des Kolbenkörpers verbunden ist.

Die beiden vorstehend beschriebenen Verfahren weisen den Nachteil auf, daß für das Umformen und das Einpressen des Dichtungsmaterials in die Rillen auf der Umfangsfläche des Kolbenkörpers erhebliche Preßdrücke erforderlich sind und das die Dichtung bildende Kunststoffmaterial starken Umformungen unterworfen wird, die nachteilig die Struktur des Dichtungswerkstoffs beeinflussen. Nur bei einer genauen Kalibrierung läßt sich der gewünschte Abdichtungsgrad erzielen. Unterschiedliche Durchmesseränderungen von Kolben und Zylinder durch Temperatureinflüsse lassen sich ebensowenig wie ein Verschleiß der Dichtung kompensieren.

DE 44 21 968 A1 schließlich offenbart einen Dämpfungskolben für einen Schwingungsdämpfer, wobei der Dämpfungskolben an einer Kolbenstange befestigt ist und einen eine Dämpfungsflüssigkeit enthaltenden Dämpfungszylinder in zwei Arbeitsräume unterteilt und zwischen seiner Außenmantelfläche und der umgebenden Zylinderinnenfläche eine ringförmige Dichtung in Form einer Kunststoffschicht aufweist, welche in der Nähe des oberen und unteren Kolbenendes Dichtlippen beinhaltet.

Der Erfindung liegt die Aufgabe zugrunde, einen Kolben, insbesondere Stoßdämpferkolben zu schaffen, bei dem die vorstehend beschriebenen Nachteile vermieden sind.

Diese Aufgabe wird gemäß der Erfindung gelöst durch einen Kolben für eine Kolben-Zylinder-Anordnung, insbesondere Stoßdämpferkolben, mit einem Kolbenkörper, der auf seiner Umfangsfläche mit wenigstens zwei umlaufenden Stegen versehen ist, die eine Nut begrenzen, bei dem ferner auf die Stege eine manschettenförmige Dichtung aus einem warmverformbaren Kunststoffmaterial aufgeformt ist, die die Stege übergreift, und mit axialen Durchlaßkanälen im Kolbenkörper, die über einseitig öffnende Drosselventile verschlossen sind, sowie mit wenigstens einer Radialöffnung, die wenigstens einen Durchlaßkanal mit der Nut zwischen zwei Stegen verbindet. Überraschenderweise hat sich herausgestellt, daß es für eine einwandfreie und zuverlässige Verbindung zwischen Dichtung und Kolbenkörper nicht erforderlich ist, eine Vielzahl von Rillen auf der Umfangsfläche des Kolbenkörpers anzuordnen. Es genügen hierbei wenigstens zwei umlaufende, eine Nut begrenzende Stege, auf die die manschettenförmige Dichtung in der in EP-A-682 190 beschriebenen Weise aufgeformt wird. Überraschend hat sich hierbei ferner herausgestellt, daß es genügt, wenn die Stege nur über einen Teil ihrer Höhe in das Material der Dichtung eingeformt werden. Einerseits ergibt sich hierbei ein einwandfreier Formschluß zwischen der manschettenförmigen Dichtung und dem Kolbenkörper und zum anderen nur eine mäßige Umformung des Kunststoffmaterials, so daß nicht nur geringere Preßkräfte aufzubringen sind, sondern auch in wesentlich geringerem Maße ein Materialfluß bei der Umformung erfolgt und damit eine nachteilige Beeinflussung der Materialstruktur praktisch vermieden wird. Durch die die beiden Stege übergreifende manschettenförmige Dichtung entsteht zwischen der Innenfläche der Dichtung und der Nut ein wenn auch geringer, in Umfangsrichtung um den Kolbenkörper umlaufender Hohlraum. Da die Durchlaßkanäle im Kolbenkörper wechselseitig mit einseitig öffnenden Drosselventilen verschlossen sind, werden in der einen Bewegungsrichtung ein Teil der Durchlaßkanäle durch die Drosselventile durch den sich aufbauenden Druck im Zylinder vollständig geschlossen, während sich die Drosselventile der anderen Durchlaßkanäle entsprechend öffnen, so daß die Hydraulikflüssigkeit aus einem Zylinderraum in den anderen Zylinderraum überströmen kann. Hierbei baut sich in den durchströmten Durchlaßkanälen ein entsprechend hoher Flüssigkeitsdruck auf. Da wenigstens einer dieser Durchlaßkanäle mit einer Radialöffnung versehen ist, die in den Ringraum zwischen manschettenförmiger Dichtung und Nutgrund ausmündet, kann ein Teil der Hydraulikflüssigkeit in diesen Ringraum eintreten und hier einen entsprechenden Druck aufbauen. Da die manschettenförmige Dichtung aus einem Kunststoffmaterial hergestellt und innerhalb gewisser Grenzen elastisch verformbar ist, wobei der Ringspalt zwischen der äußeren Umfangsfläche der manschettenförmigen Dichtung einerseits und der zugeordneten Zylinderwandung andererseits sehr klein ist, wird die manschettenförmige Dichtung unter dem Einfuß des Drucks im Ringraum nach außen ausgebeult und gegen die Zylinderwandung angepreßt. Da der Druck im Durchlaßkanal von der Belastung des Stoßdämpfers abhängig ist, ergibt sich somit eine lastabhängige Abdichtung des Kolbens im Zylinder.

Je nach Wahl des mit einer Radialöffnung versehenen Durchlaßkanals ist es möglich, diese druckabhängige Veränderung der Anpreßkraft der Dichtung für eine Bewegung des Kolbens in die eine oder in die andere Dichtung selektiv vorzusehen.

In vorteilhafter weiterer Ausgestaltung der Erfindung ist vorgesehen, daß die manschettenförmige Dichtung jeweils mit ihren Rändern die zugeordneten Stirnflächen des Kolbenkörpers überragt. Da die manschettenförmige Dichtung nach dem bekannten Verfahren aus einer Kreisringscheibe hergestellt wird, kann das in EP-A-0 682 190 beschriebene Phänomen der "Rückerinnerung" des Kunststoffmaterials dazu genutzt werden, daß der den Innendurchmesser der Kreisringscheibe begrenzende Rand nach dem Aufbringen auf den Kolbenkörper sich nach innen zusammenzieht und der vom äußeren Rand der Kreisringscheibe herrührende Rand der manschettenförmigen Dichtung sich nach außen zurückstellt und hierbei nach Art einer Dichtlippe die übrige Umfangsfläche der manschettenförmigen Dichtung überragt. Wird der Kolbenkörper so eingebaut, daß die mit dem lippenförmig nach außen weisenden Rand versehene Kolbenfläche bei der Verwendung als Stoßdämpferkolben der Druckseite, also der mit hoher Last beaufschlagten Seite, zugekehrt ist und die Kolbenfläche mit dem nach innen zurückspringenden Rand auf der sogenannten Zugseite angeordnet ist, dann ergibt sich eine verbesserte Abdichtung des Kolbens im Stoßdämpferzylinder bei der Druckbelastung, da die Hydraulikflüssigkeit im lippenförmigen Rand an die Zylinderwandung anpreßt.

Beim Zurückfedern, also bei Zuglast, kann dann infolge des geringen Spiels zwischen Kolbenwandung und Zylinderwandung in geringem Maße die Hydraulikflüssigkeit in diesen Zwischenraum eintreten und hierbei für eine Schmierung bis hin zur Anlagekante des lippenförmig an der Zylinderwandung anliegenden Randes der manschettenförmigen Dichtung gelangen und so hier für eine einwandfreie Schmierung und damit eine Verminderung des Verschleißes der Dichtung sorgen. Da der Strömungswiderstand durch diesen geringen Spielspalt zwischen der Dichtungsfläche des Kolbens und der Zylinderwandung um ein erhebliches höher ist als der Durchflußwiderstand durch die überströmenden Kanäle im Kolbenkörper, ergibt sich praktisch keine Leistungsminderung.

Die vorstehend beschriebene Verminderung der Dichtwirkung der manschettenförmigen Dichtung beim Zurückfedern kann nun mit der erfindungsgemäßen Konzeption dadurch ausgeglichen werden, daß die radiale Öffnung im Kolbenkörper wenigstens einem der Durchlaßkanäle zugeordnet wird, die beim Zurückfedern, also bei Zuglast, von der Hydraulikflüssigkeit gegen die Wirkung des Drosselventils durchströmt werden. Durch die elastische Verformung der manschettenförmigen Dichtung infolge des Druckaufbaus im Ringraum wird dann auch bei dieser Bewegung die Dichtung an die Zylinderwandung angepreßt und damit die verminderte Dichtwirkung infolge der fehlenden Dichtlippe kompensiert.

In besonders vorteilhafter Ausgestaltung der Erfindung ist vorgesehen, daß die Stege jeweils in den an die Stirnfläche des Kolbenkörpers angrenzenden Bereichen angeordnet sind. Bei dieser Geometrie sind dann zweckmäßigerweise nur zwei Stege vorgesehen, die dann nur eine Nut im dazwischen liegenden Bereich der Umfangsfläche des Kolbenkörpers begrenzen. Die Stege können verhältnismäßig breit bemessen sein, wobei die von den Stegen seitlich begrenzte Nut dann zwei bis drei mal so breit sein kann wie eine Stegbreite. Hierdurch wird die Kontur der Umfangsfläche des Kolbenkörpers in der Formgebung erheblich vereinfacht.

In besonders vorteilhafter Ausgestaltung der Erfindung ist vorgesehen, daß der Kolbenkörper aus wenigstens zwei Teilelementen zusammengefügt ist und eine jeweils senkrecht zur Kolbenachse verlaufende Teilungsebene aufweist. Ein derartiger Aufbau eines Kolbenkörpers ist insbesondere für die Herstellung des Kolbenkörpers im pulvermetallurgischen Verfahren, d. h. als Sintermetallkörper geeignet. Die Formgebung der beiden Teilelemente ist insbesondere dann günstig, wenn jedes Teilelement nur einen umlaufenden Steg aufweist, so daß die spiegelbildlich zusammengefügten Teilelemente mit ihren Stegen eine entsprechende Nut begrenzen. Dies erlaubt auch die Herstellung einer hinterschnittenen Nut.

In einer Abwandlung der Erfindung ist ferner vorgesehen, daß an einem Kolbenkörper mit zwei Stegen zwei manschettenförmige Dichtungen nebeneinander jeweils einen Steg überdeckend angeordnet sind. Die die Stirnflächen des Kolbenkörpers überragenden Ränder der Dichtungen können nach außen und/oder nach innen weisend geformt sein, und die anderen Ränder der beiden Dichtungen im Bereich der Nut zwischen den beiden Stegen entsprechend aneinandergrenzen. Da die Dichtfunktion jeweils unter Last im wesentlichen durch die als Lippendichtung wirkenden Ränder der Dichtung bewirkt wird, kann bei einer entsprechend geringen Dimensionierung der radialen Öffnung die aus einem Durchlaßkanal über die radiale Öffnung in die Nut einströmende Hydraulikflüssigkeit durch den Spalt zwischen den beiden manschettenförmigen Dichtungen hindurchströmen und die Dichtfläche zwischend er Zylinderwandung und der manschettenförmigen Dichtung zugleich schmieren. Da die radiale Öffnung ihrerseits als Drossel wirkt, ergibt sich nur ein geringer Druckaufbau im Bereich der Nut, so daß die Dichtwirkung der jeweils druckseitigen Dichtlippe nicht beeinträchtigt wird. Die sich auf der Niederdruckseite befindende Dichtlippe kann jedoch auf der aus dem Spalt zwischen den beiden manschettenförmigen Dichtungen ausströmenden Hydraulikflüssigkeit "aufschwimmen", so daß eine entsprechende Schmierung erfolgt.

Die Erfindung wird anhand schematischer Zeichnungen eines Ausführungsbeispiels näher erläutert. Es zeigen:
- Fig. 1: einen Teilschnitt in Achsrichtung durch eine Kolben-Zylinder-Anordnung für einen Stoßdämpfer,
- Fig. 2: einen vergrößerten Teilschnitt durch den Kolben der Anordnung gemäß Fig. 1,
- Fig. 3: eine Ausführungsform mit zweiteiliger manschettenförmiger Dichtung,
- Fig. 4: eine Abwandlung der Ausführungsform gemäß Fig. 3.

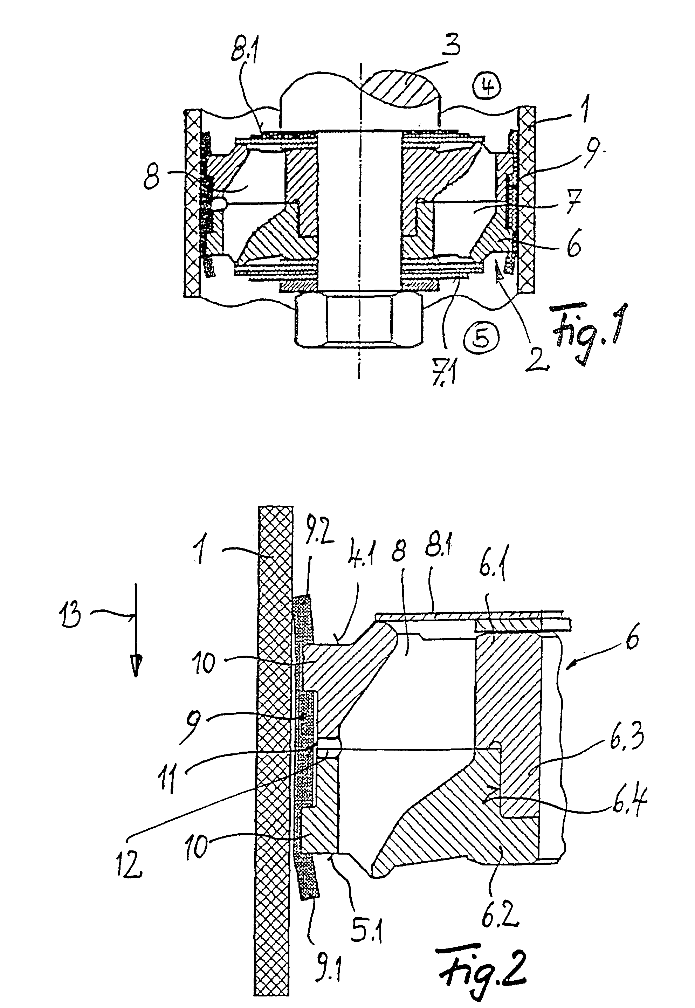

Fig. 1 zeigt einen axialen Schnitt durch einen Stoßdämpfer, der zwei relativ zueinander bewegbare Teile, beispielsweise eine Fahrzeugachse und einen Fahrzeugrahmen miteinander verbindet. Der Stoßdämpfer weist einen Zylinderteil 1 auf, der mit einem der beiden relativ zueinander bewegbaren Teile verbunden ist. Im Zylinder 1 ist ein Kolben 2 geführt, der an einer Kolbenstange 3 befestigt ist, die mit ihrem freien Ende am anderen Teil der beiden relativ zueinander bewegbaren Teile festgelegt ist. Der Zylinder 1 ist hierbei beidseitig geschlossen und mit einer Hydraulikflüssigkeit gefüllt, so daß die Kolben-Zylinder-Anordnung doppelt wirkend ausgelegt ist, wobei der Kolben zwei Zylinderräume 4, 5 voreinander trennt.

Der Kolbenkörper 6 des Kolbens 2 weist mehrere nebeneinander verlaufende Durchtrittskanäle 7, 8 auf. Die Durchtrittskanäle 7, 8 sind jeweils auf ihrer in der Funktion noch zu erläuternden Austrittsseite mit einem Drosselventil 7.1 bzw. 8.1 abgedeckt. Die Anordnung ist hierbei so getroffen, daß beispielsweise drei Durchtrittskanäle 7 und drei Durchtrittskanäle 8 sternförmig alternierend um die Zylinderachse angeordnet vorgesehen sind.

Die Umfangsfläche des Kolbens 2 ist mit einer manschettenförmigen Dichtung 9 versehen, die für eine Abdichtung des Zylinderraums 4 gegenüber dem Zylinderraum 5 sorgt. Bei einer Bewegung des Kolbens 2 in den Zylinderraum 4 hinein, wird die Flüssigkeit durch die Durchtrittskanäle 7 gegen die Rückstellkraft der Drosselventile 7.1 gepreßt. Die Durchtrittsöffnungen 8 werden hierbei durch den auf die Drosselventile 8.1 lastenden Druck des Flüssigkeitsraums 4 verschlossen gehalten. Bei einer Bewegung in umgekehrter Richtung werden die Durchtrittskanäle 7 durch die Drosselventile 7.1 geschlossen, während die Flüssigkeit durch die durchströmenden Kanäle 8 aus dem Zylinderraum 5 in den Zylinderraum 4 zurückströmen kann.

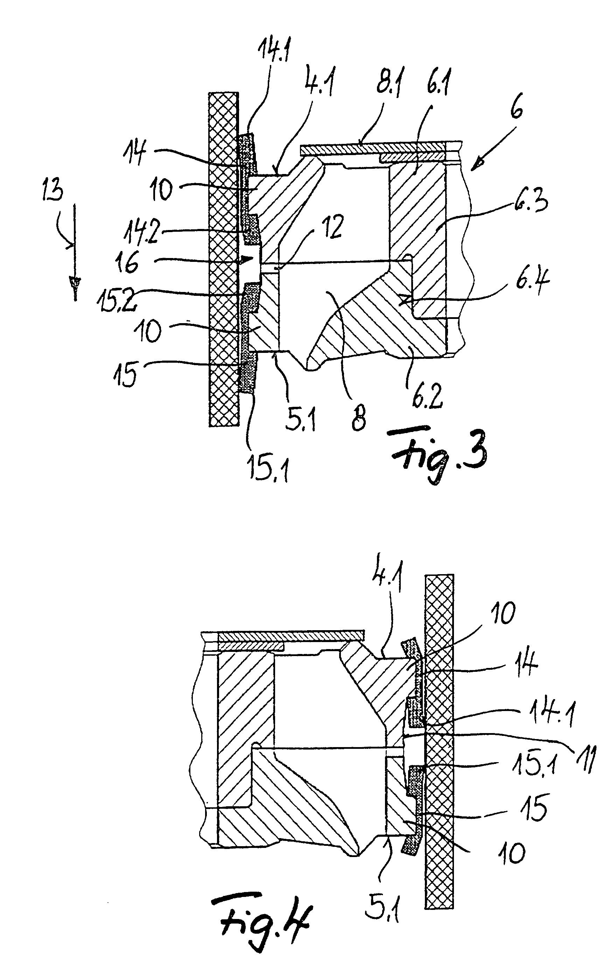

In Fig. 2 ist im Teilschnitt ein Kolben 2 in vergrößerter Darstellung wiedergegeben. Der Kolbenkörper 6 ist auf seiner Umfangsfläche mit zwei Stegen 10 versehen, die bei dem hier dargestellten Ausführungsbeispiel so angeordnet sind, daß sie jeweils auch einen Teil der Stirnfläche 4.1 bzw. 5.1 des Kolbenkörpers 6 beinhalten. Die beiden Stege 10 begrenzen auf der Umfangsfläche des Kolbenkörpers 6 eine Nut 11.

Die auf der Umfangsfläche des Kolbenkörpers 6 angeordnete manschettenförmige Dichtung 9 besteht aus einem warm verformbaren Kunststoff, vorzugsweise aus PTFE. Die manschettenförmige Dichtung 9 ist bei dem hier dargestellten Ausführungsbeispiel durch Warmumformung aus einer Kreisringscheibe auf die Umfangsfläche des Kolbenkörpers 6 aufgeformt worden, wobei der Rand 9.1 der Dichtung 9 durch den Innenrand der Kreisringscheibe gebildet wird, während der Rand 9.2 durch den Außenrand der Kreisringscheibe gebildet wird. Die Kreisringscheibe war in ihrer Ringbreite so bemessen, daß sie breiter war als die Dicke des Kolbenkörpers 6 in axialer Erstreckung, so daß nach dem Umformen der vom Innenrand der Kreisringscheibe herrührende Rand 9.1 nach innen eingezogen ist, während der vom Außenrand der Kreisringscheibe herrührende Rand 9.2 nach außen abgebogen ist und in der Funktion eine Dichtlippe bildet.

Bei der Warmumformung der Kreisringscheibe sind die Stege 10 nur über einen Teil ihrer Höhe in das Material der manschettenförmigen Dichtung 9 eingeformt, so daß zwischen dem Material der Dichtung 9 und dem Boden der Nut 11 noch ein gewisser Freiraum verbleibt, so daß beim Formen der Dichtung 9 das Dichtungsmaterial frei und ohne Zwängung in die Nut 11 einfließen kann. Bei diesem Umformungsvorgang wird die zylindrische Außenfläche 12 der Dichtung 9 gleichzeitig kalibriert, so daß die gewünschten Toleranzen zum Innendurchmesser des Zylinders 1 eingehalten werden können. Da insbesondere bei der Verwendung einer derartigen Kolben-Zylinder-Anordnung als Stoßdämpfer im Betrieb eine Erwärmung des Gesamtsystems auftritt, erlaubt dieser verbleibende Freiraum im Nutgrund innerhalb gewisser Grenzen auch eine Ausdehnung des Dichtungsmaterials in die Nut hinein, so daß der Verschleiß der Dichtung auf der an die Ränder angrenzenden zylindrischen Umfangsflache der Dichtung 9 herabgesetzt wird.

Wie in Fig. 1 angedeutet und in Fig. 2 in der vergrößerten Darstellung besser ersichtlich, ist der Kolbenkörper 6 mit einer Radialöffnung 12 versehen, die die Nut 11 bei dem dargestellten Ausführungsbeispiel mit dem Durchtrittskanal 8 verbindet. Bei einer Bewegung des Kolbens 2 in Richtung des Pfeiles 13 baut sich im Durchtrittskanal 8 unter dem Einfluß des Drosselventils 8.1 ein entsprechender Druck auf, der auch im Zwischenraum zwischen der manschettenförmigen Dichtung 9 und der Nut 11 wirksam wird. Bei einer groß bemessenen Öffnung, die praktisch keine Drosselwirkung hat, wird in diesem Zwischenraum der volle Druck wirksam, so daß sich die manschettenförmige Dichtung 9 entsprechend nach außen beult und an die Innenwandung des Zylinders 1 in Abhängigkeit von dem Druck angepreßt wird. Damit wird die bei einer Bewegung des Kolbens 2 in Richtung des Pfeiles 13 verminderte Dichtwirkung des als Dichtlippe wirkenden Randes 9.2 durch ein Anpressen der Dichtung 9 an die Zylinderwandung kompensiert. Über eine entsprechende Verminderung des Durchmessers der radialen Öffnung 12 kann diese auch als Drossel wirken, so daß sich im Raum unter der manschettenförmigen Dichtung 9 ein entsprechend geringerer Druck aufbaut und damit eine geringere Anpreßkraft der Dichtung an die Zylinderwandung wirksam wird. Hierbei ist es dann zweckmäßig, wenn jeder der Durchtrittskanäle 8 mit einer entsprechenden radialen Öffnung mit dem Ringraum unter der manschettenförmigen Dichtung 9 versehen wird, um einen gleichmäßigen Druckaufbau im Ringraum zu erzielen.

In Fig. 3 ist eine abgewandelte Ausführungsform dargestellt. Bei dieser Ausführungsform sind zwei manschettenförmige Dichtungen 14, 15 vorgesehen, die so aufgebracht sind, daß jeweils die außenliegenden Ränder 14.1 und 15.1 nach außen weisen, während die innenliegenden Ränder 14.2 und 15.2 nach innen eingezogen sind. Die beiden Ränder 14.2 und 15.2 können unmittelbar aneinanderstoßen, wobei die manschettenförmige Dichtung 14 den Bereich der Durchtrittsöffnung 12 überdecken kann. Die Durchtrittsöffnung 12 ist zweckmäßigerweise so bemessen, daß sie bei starker Drosselung bei Druckbeaufschlagung um ein geringes Maß Hydraulikflüssigkeit durchläßt, die dann über den Spalt 16 zwischen den beiden manschettenförmigen Dichtungen 14, 15 austreten und hierbei für eine Schmierung sorgen kann. Die Durchtrittsöffnungen 12 können hierbei so angeordnet sein, daß sowohl bei der Hinbewegung, d. h. in Richtung des Pfeiles 13, als auch bei der Rückbewegung, d. h. entgegen der Richtung des Pfeiles 13, der Kolben 2 geschmiert wird.

Wie der Vergleich zwischen Fig. 2 und Fig. 3 ferner erkennen läßt, kann bei der Verwendung einer zweiteiligen Dichtung die Umformung des Materials der beiden manschettenförmigen Dichtungen 14 und 15 so weit durchgeführt werden, daß die Stege 10 jeweils in voller Höhe in das Material eingeformt sind. Durch eine jeweils von den Stegen 10 nach innen leicht abfallenden Verlauf des Nutgrundes in Verbindung mit dem vorbeschriebenen Rückerinnerungsvermögen des Kunststoffmaterials ergibt sich somit eine zuverlässige Verankerung der manschettenförmigen Dichtungen jeweils auf nur einem Steg.

In Fig. 4 ist eine Abwandlung der Ausführungsform gemäß Fig. 3 dargestellt, die sich praktisch nur dadurch unterscheidet, daß die vom Außenrand der bei der Herstellung der manschettenförmigen Dichtung verwendeten Kreisringscheibe herrührende Dichtlippe 14.1 bzw. 15.1 sich im Bereich der Nut 11 befinden. Die Anordnung kann aber auch so getroffen werden, daß die jeweils nach außen weisenden Ränder 14.1 und 15.1 der beiden Dichtungen 14 und 15 so angeordnet sind, daß die Dichtung 14 in der Zuordnung ihres Randes 14.1 zum Kolbenkörper 6 entsprechend Fig. 2 auf den Steg aufgeformt ist und die Dichtung 15 in der Zuordnung ihres Randes zu ihrem Steg am Kolbenkörper 6 entsprechend der Ausführungsform gemäß Fig. 3 angeordnet ist, so daß der nach außen weisende Rand 14.1 der Dichtung 14 der Stirnfläche zugeordnet ist und der nach außen weisende Rand 15.1 der Dichtung 15 im Bereich der Nut 11 verläuft.

Wie Fig. 1 und Fig. 2 erkennen lassen, ist der Kolbenkörper 6 aus zwei Teilelementen 6.1 und 6.2 hergestellt. Hierbei ist zu erkennen, daß der Verlauf der Konturen der Durchtrittskanäle 7 und 8 jeweils in dem einen und in dem anderen Teil identisch sind, so daß abgesehen von der Anordnung einer Buchse 6.3 am Teilelement 6.1 und einer entsprechend zugeordneten Ausnehmung 6.4 am Teilelement 6.2 beide Teilelemente in ihrer äußeren Formgebung identisch und ohne einen Preßvorgang hindernde Hinterschneidungen ausgebildet sind. Damit besteht die Möglichkeit, einen derartigen Kolbenkörper 6 aus zwei pulvermetallurgisch hergestellten Teilelementen zu bilden, die als Teilelemente aus einem sintermetallurgischen Pulver gepreßt werden können. Die gepreßten Teilelemente werden dann in einer Fügeoperation entsprechend zusammengefügt und anschließend gesintert. Beim Pressen des Grünlings können die Konturen der Durchtrittsöffnungen 12 bereits eingeformt werden. Gerade diese Art der Herstellung erlaubt es aber, die Teilelemente so herzustellen, daß die Durchtrittskanäle unter Berücksichtigung der unterschiedlichen Durchströmungsbedingungen bei Zug- und Druckbelastung unterschiedlich geformt sein können.

Je nach dem Herstellungsverfahren ist es auch möglich, mehr als zwei Stege 10 vorzusehen, so daß jeweils zwei benachbarte Stege eine Nut begrenzen und dementsprechend auch eine höhere Anzahl von Nuten vorhanden ist. Hierbei genügt es, wenn nur in eine Nut eine Durchtrittsöffnung 12 mündet.

Der Kolbenkörper 6 kann auch geometrisch anders gestaltet werden und auch durch spanabhebende Verfahren hergestellt werden.

## Patentansprüche

1. Kolben für eine Kolben-Zylinder-Anordnung, insbesondere Stoßdämpferkolben, mit einem Kolbenkörper (6), der auf seiner Umfangsfläche mit wenigstens zwei umlaufenden Stegen (10) versehen ist, die eine Nut (11) begrenzen, **dadurch gekennzeichnet, daß** auf die Stege eine manschettenförmige Dichtung (9) aus einem warmverformbaren Kunststoffmaterial aufgeformt ist, die die Stege (10) übergreift, und mit axialen Durchlaßkanälen (7, 8) im Kolbenkörper, die über einseitig öffnende Drosselventile (7.1, 8.1) verschlossen sind, sowie mit wenigstens einer Radialöffnung (12), die wenigstens einen Durchlaßkanal (7, 8) mit der Nut (11) zwischen zwei Stegen (10) verbindet.

2. Kolben nach Anspruch 1, **dadurch gekennzeichnet, daß** die manschettenförmige Dichtung (9) die Nut (11) zwischen zwei Stegen (10) abdichtend überdeckt.

3. Kolben nach Anspruch 1 oder 2, **dadurch gekennzeichnet, daß** der Kolbenkörper (6) aus wenigstens zwei Teilelementen (6.1, 6.2) zusammengefügt ist und eine senkrecht zur Kolbenachse verlaufende Teilungsebene aufweist, und daß die Radialöffnung (12) im Bereich der Teilungsebene verläuft.

4. Kolben nach einem der Ansprüche 1 bis 3, **dadurch gekennzeichnet, daß** jedes Teilelement (6.1, 6.2) einen umlaufenden Steg (10) aufweist.

5. Kolben nach einem der Ansprüche 1 bis 4, **dadurch gekennzeichnet, daß** der Kolbenkörper (6) pulvermetallurgisch hergestellt ist.

6. Kolben nach einem der Ansprüche 1 bis 5, **dadurch gekennzeichnet, daß** die Stege (10) jeweils in den an die Stirnflächen (4.1, 5.1) des Kolbenkörpers (6) angrenzenden Bereichen angeordnet sind.

7. Kolben nach einem der Ansprüche 1 bis 6, **dadurch gekennzeichnet, daß** die manschettenförmige Dichtung (9) jeweils mit ihren Rändern (9.1, 9.2) die zugeordnete Stirnfläche (4.1, 5.1) des Kolbenkörpers (6) überragt.

8. Kolben nach einem der Ansprüche 1 bis 7, **dadurch gekennzeichnet, daß** an einem Kolbenkörper (6) mit zwei Stegen (10) zwei manschettenförmige Dichtungen (14, 15) nebeneinander jeweils einen Steg (10) überdeckend angeordnet sind.

## Claims

1. Piston for a piston-cylinder arrangement, in particular shock absorber piston, with a piston body (6) which is provided with at least two circulating webs (10) on its peripheral area, which webs define a groove (11), **characterised in that** a collar-shaped seal (9) of a thermoforming plastics material is formed onto the webs, which seal engages over the webs (10), and with axial flow channels (7, 8) in the piston body which are closed by means of throttle valves (7.1, 8.1) which open on one side, and with at least one radial opening (12) which connects at least one flow channel to the groove (11) between two webs (10).

2. Piston according to Claim 1, **characterised in that** the collar-shaped seal (9) overlaps the groove (11) between two webs (10) so as to seal it off.

3. Piston according to Claim 1 or 2, **characterised in that** the piston body (6) is assembled from at least two subelements (6.1, 6.2) and has a plane of division extending perpendicularly to the piston axis, and that the radial opening (12) extends in the region of the plane of division.

4. Piston according to any one of Claims 1 to 3, **characterised in that** each sub-element (6.1, 6.2) has a circulating web (10).

5. Piston according to any one of Claims 1 to .4., **characterised in that** the piston body (6) is manufactured by powder metallurgy.

6. Piston according to any one of Claims 1 to 5, **characterised in that** the webs (10) are each arranged in the regions which are adjacent to the end faces (4.1, 5.1) of the piston body (6).

7. Piston according to any one of Claims 1 to 6, **characterised in that** each of the edges (9.1, 9.2) of the collar-shaped seal (9) protrude beyond the associated end faces (4.1, 5.1) of the piston body (6).

8. Piston according to any one of Claims 1 to 7, **characterised in that** two collar-shaped seals (14, 15) are arranged side-by-side on a piston body (6) with two webs (10), each of the seals overlapping one web (10).

## Revendications

1. Piston pour ensemble piston-cylindre, en partculier piston d'amortisseur, comprenant un corps de piston (6) qui est pourvu d'au moins deux nervures périphériques (10) délimitant une rainure (11) sur sa surface circonférentielle, **caractérisé en ce qu'**un joint d'étanchéité (9) en forme de manchette en une matière plastique déformable à chaud est formé sur les nervures, qui recouvre les nervures (10), et comprenant des canaux de passage axiaux (7, 8) dans le corps de piston, qui sont fermés à l'aide de soupapes d'étranglement (7,1, 8,1) à ouverture unilatérale, et comprenant au moins un orifice radial (12) reliant au moins un canal de passage (7, 8) avec la rainure (11) entre deux nervures (10).

2. Piston selon la revendication 1, **caractérisé en ce que** le joint d'étanchéité (9) en forme de manchette recouvre de façon étanche la rainure (11) entre deux nervures (10).

3. Piston selon la revendication 1 ou 2, **caractérisé en ce que** le corps de piston (6) est assemblé à partir d'au moins deux éléments partiels (6,1, 6,2) et présente un plan de joint s'étendant perpendiculairement à l'axe de piston, et **en ce que** l'orifice radial (12) s'étend dans la zone du plan de joint.

4. Piston selon une des revendications 1 à 3, **caractérisé en ce que** chaque élément partiel (6,1, 6,2) présente une nervure périphérique (10).

5. Piston selon une des revendications 1 à 4, **caractérisé en ce que** le corps de piston (6) est réalisé par métallurgie des poudres.

6. Piston selon une des revendications 1 à 5, **caractérisé en ce que** les nervures (10) sont respectivement disposées dans des zones adjacentes aux surfaces frontales (4,1, 5,1) du corps de piston (6).

7. Piston selon une des revendications 1 à 6, **caractérisé en ce que** le joint d'étanchéité (9) en forme de manchette saillit avec ses bords respectifs (9,1, 9,2) de la surface frontale (4,1, 5,1) associée du corps de piston (6).

8. Piston selon une des revendications 1 à 7, **caractérisé en ce que** sur un corps de piston (6) ayant deux nervures (10), deux joints d'étanchéité (14, 15) en forme de manchette sont justaposés en recouvrant chacun une nervure (10).
